Europäisches Patentamt

European Patent Office

Office européen des brevets

(19)

(11) **EP 1 003 346 A1**

(12) # DEMANDE DE BREVET EUROPEEN

(43) Date de publication:
**24.05.2000 Bulletin 2000/21**

(51) Int Cl.[7]: **H04Q 7/32**

(21) Numéro de dépôt: **99402546.8**

(22) Date de dépôt: **15.10.1999**

| | |
|---|---|
| (84) Etats contractants désignés:<br>**AT BE CH CY DE DK ES FI FR GB GR IE IT LI LU MC NL PT SE**<br>Etats d'extension désignés:<br>**AL LT LV MK RO SI** | (72) Inventeurs:<br>• **Charbonnier, Philippe**<br>**78600 Le Mesnil le Roi (FR)**<br>• **Lafourcade Jumembo, Alec**<br>**Tocoma, WA 98402 (US)** |
| (30) Priorité: **20.10.1998 FR 9813126** | (74) Mandataire: **Bloch, Gérard**<br>**2, square de l'Avenue du Bois**<br>**75116 Paris (FR)** |
| (71) Demandeur: **SAGEM SA**<br>**75116 Paris (FR)** | |

(54) **Terminal d'un réseau téléphonique, ayant accès à des services dont dispose un terminal mobile d'un autre réseau**

(57) Le terminal téléphonique (4, 5) d'un premier réseau téléphonique (3) comporte des circuits (40, 42, 43, 46, 56, 57, 60) pour être relié à un terminal téléphonique mobile (2) d'un deuxième réseau téléphonique (1) et des circuits (5, 40) pour commander le terminal mobile (2) lorsqu'il est soit en cours de communication soit libre d'en établir une, afin de disposer des services du terminal mobile (2) et de son réseau (1).

FIG.1

EP 1 003 346 A1

# Description

Les réseaux téléphoniques de téléphones mobiles, comme le réseau de radiotéléphonie cellulaire GSM, qui se sont développés à côté du réseau téléphonique commuté, offrent à leurs usagers une grande liberté de mouvement mais les services offerts par un tel réseau ne sont accessibles qu'aux téléphones de ce réseau, que ce soient des services offerts par l'exploitant du réseau, comme le double appel ou la conférence à trois dans le réseau GSM, ou des services internes aux téléphones mobiles, comme l'annuaire personnalisé et la numérotation abrégée.

La présente invention vise à étendre l'accès des services d'un réseau téléphonique de radiotéléphonie à des équipements externes au réseau.

A cet effet, l'invention concerne un terminal téléphonique d'un premier réseau téléphonique, comportant des moyens pour être relié à un terminal téléphonique mobile d'un deuxième réseau téléphonique et des moyens pour commander le terminal mobile lorsqu'il est soit en cours de communication soit libre d'en établir une, afin de disposer des services du terminal mobile et de son réseau.

On notera tout d'abord que la notion de communication en cours doit être interprétée comme désignant l'état, stable, dans lequel un réseau téléphonique a établi une liaison téléphonique entre deux terminaux, dont les utilisateurs, ou des circuits d'échange d'informations, sont ainsi libres de communiquer entre eux. Un tel état est donc encadré dans le temps par deux phases transitoires, d'établissement et de rupture de la liaison téléphonique. De même, par téléphone mobile, il faut entendre un terminal téléphonique mobile d'un réseau radio de téléphonie.

Le terminal du premier réseau constitue ainsi un terminal multiréseaux par son intégration fonctionnelle au deuxième réseau, réalisée à travers le terminal mobile, par commande de celui-ci.

L'invention sera mieux comprise à l'aide de la description suivante d'une forme de réalisation préférée du terminal téléphonique de l'invention, en référence au dessin annexé sur lequel :

- la figure 1 est un schéma par blocs représentant le terminal téléphonique de l'invention, relié à un réseau RTC et à un combiné du réseau de radiotéléphonie cellulaire GSM,
- la figure 2 est un organigramme illustrant le séquencement classique d'un double appel du réseau GSM, et
- la figure 3 est un organigramme correspondant, illustrant le déport des signalisations GSM dans le terminal du réseau RTC.

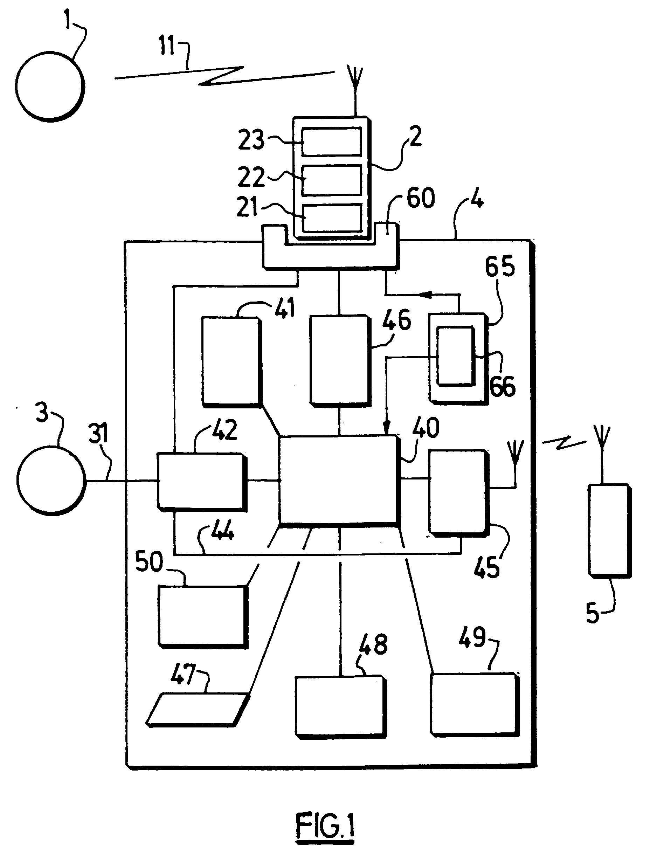

Sur la figure 1, un réseau téléphonique 1, ici le réseau de radiotéléphonie cellulaire GSM, peut être relié, par une voie radio 11, à un terminal téléphonique mobile 2, ou combiné, de ce réseau. Un terminal téléphonique 4, 5 est relié, par une ligne 31, à un autre réseau téléphonique 3, ici filaire, et précisément le réseau téléphonique commuté RTC. Dans cet exemple, il s'agit d'une base 4 d'un réseau local de téléphonie sans fil reliant, au réseau RTC 3, des postes sans fil 5, satellites, dont un seul est représenté. Outre un microprocesseur de gestion et des circuits phoniques classiques avec interface radio, le poste 5 comporte un clavier et un écran, non représentés. Dans la base 4, la ligne 31 est reliée à un circuit 42 d'équipement de ligne, de protection, détection et émission de signalisations, de liaison phonique et de commutation de ligne, qui est aussi relié à deux liaisons phoniques bidirectionnelles 43 et 44 internes à la base 4. La liaison 43 aboutit à un connecteur 60 de la base 4, agencé pour recevoir le combiné 2, comportant un connecteur complémentaire du connecteur 60. La liaison 44 aboutit à un circuit radio émetteur/récepteur classique 45 avec codeur/décodeur, assurant les liaisons phoniques et de signalisation avec les divers postes 5 par les voies temporelles d'une trame, ici à la norme DECT.

Une unité centrale à microprocesseur 40, associée à une mémoire 41 de logiciels d'exploitation de la base 4 et de données, est reliée aux divers circuits de la base 4 et, en particulier, au circuit 42 pour en gérer les signalisations échangées avec le RTC 3 par la ligne 31 et pour commuter l'extrémité des liaisons 31, 43 et 44, en particulier relier la liaison 44 soit à la ligne 31 soit à la liaison 43 allant au combiné 2, ou encore relier la ligne 31 à la liaison 43

De même, l'unité centrale 40 commande le circuit radio 45 pour établir et couper les communications des postes 5. L'unité centrale 40 est en outre reliée, par une liaison bidirectionnelle 56, à un bloc de calcul 46 assurant en particulier une conversion de format de données, telles que commandes et signaux de signalisation, échangées entre l'unité centrale 40 et un microprocesseur 21 du combiné 2, ceci par une liaison bidirectionnelle 57 aboutissant au connecteur 60. A celui-ci est en outre raccordé, dans cet exemple, un chargeur 65 alimenté par le secteur (non représenté). Il est ici prévu un détecteur de courant 66 dans le chargeur 65, relié au microprocesseur 21 pour l'avertir de la présence du combiné 2 dans l'embase de recharge que constitue, entre autres, le connecteur 60. Sinon, le terminal 2 pourrait signaler sa présence par l'envoi de données vers le microprocesseur 40, à travers la liaison 57. La base 4 comporte en outre un clavier 47, un écran 48 et ici une imprimante 49 reliés au microprocesseur 40. Il est ici prévu une mémoire 50, reliée à l'unité centrale 40, de logiciels de télécopie et télétex et de messages correspondants.

Le combiné 2 comporte en outre, associés au microprocesseur 21 qui le gère, une mémoire 22 de logiciel gérant entre autres les services "double appel" et "conférence" qu'offre le réseau GSM 1. Une mémoire 23 d'annuaire, de répétition des numéros (bis) et de cumul de taxes ou de temps cumulé des communications est aussi implantée dans le combiné 2 et est gérée par le microprocesseur 21. Comme évoqué plus haut, le combiné GSM 2 comporte un connecteur complémentaire du connecteur 60 pour prolonger la liaison phonique 43, jusqu'à des circuits d'interface phonique gérant un microphone et un écouteur du combiné 2, et pour alimenter une batterie du combiné 2 à partir du chargeur 65 ainsi que pour établir une liaison bidirectionnelle de données, en particulier de services, entre, d'une part, le microprocesseur 21, et à travers lui avec aussi les autres circuits du combiné 2, et, d'autre part, l'unité centrale 40 et donc aussi les postes 5.

Le fonctionnement des circuits ci-dessus va maintenant être expliqué plus en détails.

D'une façon générale, le terminal que constitue la base 4 et le poste 5 peut commander le combiné 2 lorsqu'il est soit en cours de communication soit libre d'en établir une, afin de disposer des services du combiné 2 et de son réseau 1.

La base 4, et les postes 5 à travers elle, peuvent accéder à des services dont dispose le combiné GSM 2, que l'on peut classer en deux types principaux :

1- les services d'exploitation téléphonique, purement internes au combiné 2, pour faciliter l'utilisation du combiné 2, comme la fonction annuaire, bis ou taxation 23.

Les services d'exploitation ont essentiellement une fonction d'information de l'utilisateur, par exemple pour trouver un numéro à appeler. Ils n'ont donc pas, en général, par eux-mêmes d'effet direct temps réel sur l'état des liaisons phoniques 11, 42, 43, même si, dans certains cas, l'annuaire 23 peut servir à filtrer les appels entrants en conjugaison avec la fonction d'identification, par le réseau GSM 1, de l'abonné appelant (fonction CLASS).

2- les services de commutation téléphonique, offerts par le réseau GSM 1, comme le double appel et la conférence à trois, qui peuvent eux-mêmes être divisés en :

2.1 - services temps réel pour traiter un appel, tels que double appel et conférence à trois, et en

2.2 - services de configuration ou exploitation des liaisons radio, non temps réel. Par exemple, on peut commander, dans le réseau 1, le renvoi systématique, vers un numéro prédéterminé du réseau 1 ou du réseau 3 qui est relié à celui-ci, des appels entrants destinés au combiné 2.

L'unité centrale 40 est informée, par le détecteur de courant 66, de la connexion du combiné 2 au connecteur 60. Dans cette situation, la base 4, et donc aussi les postes 5, prend le contrôle au moins partiel du combiné 2, qui en devient esclave, à travers les liaisons 56, 57 et les circuits 46, 40 et 45, qui constituent ainsi des moyens de déport de signalisations à partir du combiné 2 jusqu'à la base 4 ou le poste 5.

Services d'exploitation téléphonique (non temps réel)

Pour les services d'exploitation téléphonique, le poste 5 peut, par commande de son clavier, transmettre une demande d'établissement d'une liaison de données avec l'annuaire 23, ceci à travers l'unité centrale 40, maître, qui relaie sa demande de liaison jusqu'au microprocesseur 21, esclave, par le circuit 46, le microprocesseur 21 lui-même accédant à l'annuaire 23. On remarquera que la liaison phonique 43 reliant la base 4 au combiné 2 est inutile dans ce cas, puisqu'il s'agit d'un échange de données, pour lequel est utilisée la liaison 56, 57. Un utilisateur du poste 5 peut ainsi, à travers l'unité centrale 40, échanger des données avec le combiné 2 et en particulier lire et écrire dans l'annuaire 23, effectuer des échanges de messages courts SMS ainsi que de données de télécopieur ou autres et accéder à une boîte de messagerie vocale du combiné 2, pour échanger des informations de boîte vocale.

Services de commutation téléphonique (temps réel)

Pour des services de commutation téléphonique, le combiné 2 est de même asservi par le poste 5 à travers la base 4. Deux exploitations sont possibles.

Dans la première, le combiné 2 constitue, de façon classique, l'extrémité d'une liaison phonique (11) avec le réseau GSM 1, c'est-à-dire que l'utilisateur se sert du microphone et de l'écouteur/haut-parleur du combiné 2. Cependant, les commandes de gestion des appels, entrants ou sortants, sont engendrées depuis le clavier du poste 5, ou le clavier 47 de la base 4, et mises au format voulu pour le combiné 2 par le convertisseur de code 46. Ces commandes au format voulu sont interprétées par le microprocesseur 21 pour la gestion des circuits du combiné 2 reliés à la liaison radio 11. Sous la commande du microprocesseur 21, ces circuits gèrent la phonie ainsi que le dialogue de signalisation avec le réseau GSM 1 à travers un canal de signalisation de la liaison radio 11 qui, en particulier, assure le service d'échange de messages courts (SMS), géré au niveau supérieur par le microprocesseur 21, qui stocke et émet les messages courts et mémorise et affiche ceux qui sont reçus du réseau GSM 1.

En sens inverse, vers la base 4, les messages courts SMS et autres informations affichées sur un écran du combiné 2 ou simplement mémorisés sont renvoyées sur la base 4 pour y être mémorisées et éventuellement recopiées sur l'écran 48 et/ou l'écran du poste 5 ou encore imprimées par l'imprimante 49. Ainsi, les circuits 40, 42, 43, 45-48, 56, 57 constituent des moyens d'émulation du microprocesseur 21 gérant les échanges de messages courts SMS dans le combiné 2. Lorsque le combiné 2 est mis en connexion avec le connecteur 60, le détecteur 66 provoque une commande de scrutation du microprocesseur 21 par l'unité centrale 40, afin d'y rapatrier les informations acquises par le combiné 2 depuis sa dernière connexion à la base 4.

De même, le circuit de télécopie 50 peut échanger des télécopies, ou des messages de télétex, avec le microprocesseur 21 et donc avec le réseau GSM 1, à travers le microprocesseur 40 et le combiné 2, et les visualiser sur l'écran 48 ou les imprimer (49).

Ainsi, au moins les fonctions de relation homme-machine, ou de signalisation, autres que phoniques, sont déportées du combiné 2 sur la base 4 et/ou le poste 5. La base 4 et le poste 5 constituent, ainsi, vis-à-vis du réseau GSM 1, un émulateur d'un combiné radio classique, en ce qui concerne au moins les informations des services.

Dans la seconde exploitation, par commande depuis le clavier 47 de la base 4, ou celui du poste 5, l'utilisateur peut en outre déporter les fonctions phoniques du combiné 2 sur la base 4 ou le poste 5. Dans ce cas, l'unité centrale 40, recevant l'ordre du clavier 47 ou du poste 5, commande le circuit de liaison phonique 42 pour prolonger phoniquement la liaison radio 11 jusqu'au poste 5, à travers le circuit radio DECT 45. Les circuits évoqués ci-dessus du microphone et de l'écouteur du combiné 2 sont ainsi prolongés ou fonctionnellement déportés jusqu'à la base 4. Le poste 5 constitue ainsi un poste téléphonique multiréseaux, relié aux réseaux 1 et 3. En particulier, un tiers ne connaissant que le numéro d'appel du combiné 2 peut joindre l'utilisateur considéré à travers le poste 5. Inversement, l'utilisateur peut choisir en départ l'un ou l'autre des réseaux 1 et 3. La base 4 peut elle-même comporter toutes les fonctions d'un poste comme 5, les fonctions de liaison radio DECT étant alors inutiles.

Ainsi, comme exposé plus haut, coexistent de deux fonctions, ou liaisons, séparées de communication :

la fonction classique de commutation, ou communication phonique avec l'extérieur, offerte par le réseau de rattachement (1, 3) du combiné ou terminal considéré (2; 4, 5) et une fonction ou liaison "services", nouvelle, de communication d'informations relatives à des services, entre le combiné 2 et le terminal 4, 5 , permettant à ce dernier d'accéder aux services dont dispose le combiné 2.

On peut donc considérer que la fonction "services" est hiérarchiquement supérieure à la fonction "commutation" puisque cette dernière est, dans certains cas, commandée par la fonction "services". Ainsi, dans le cas d'un service temps réel, de double appel radio par exemple, c'est la fonction "commutation" qui est commandée en fonction des informations de services (signalisation par bip sonore) retransmises au poste 5, qui y répond par une commande de commutation vers le nouveau correspondant.

Il y a ainsi un réseau de commutation commandé, à travers l'utilisateur, par un réseau "services" local. Le réseau ou fonction "services" correspond aux couches OSI (Interconnexion des Systèmes Ouverts) 4 à 7 de protocoles d'échange et de présentation de données pour diverses applications relatives à des services, tels que l'annuaire (service local) ou le bip sonore de double appel (service réseau 1), et concerne un lien logique par lequel le combiné 2 et la base 4 peuvent dialoguer logiquement. La fonction "commutation" correspond aux couches basses 1 à 3 de l'OSI, fournissant simplement les moyens matériels de transmission de signaux de parole ou de signaux relatifs à divers services, mais sans interpréter ces signaux.

Compte tenu de cette différence fonctionnelle entre les fonctions "commutation" et "services", cette dernière est indépendante de la fonction "commutation". De ce fait, la base 4 peut librement commander le combiné 2 indépendemment de l'état d'occupation téléphonique de ce dernier. Ainsi, le combiné 5 peut être commandé par la base 4 lorsqu'il est dans un état stable, c'est-à-dire en cours de communication téléphonique établie ou libre d'en établir une, et donc alors sans correspondant téléphonique, donc hors d'un état transitoire d'établissement ou de rupture d'une communication téléphonique. Grâce à cette indépendance, il n'est cependant pas exclu que la base 4 commande le combiné 2 lors de tels états transitoires.

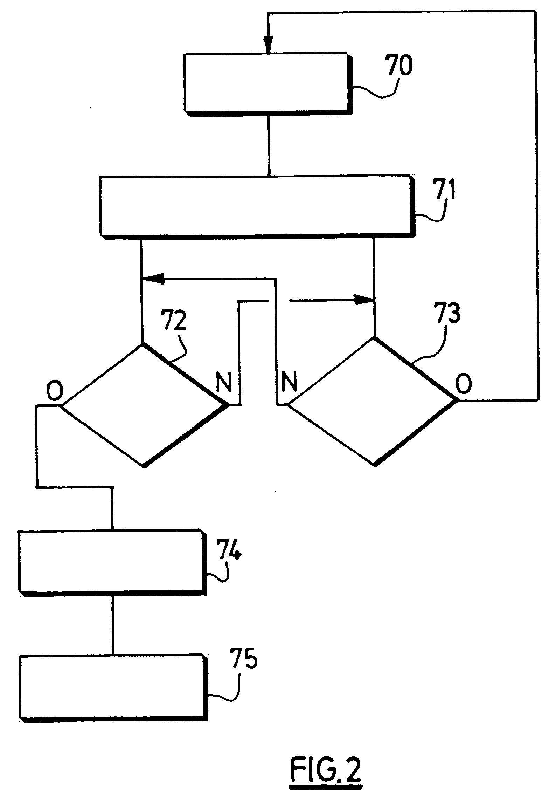

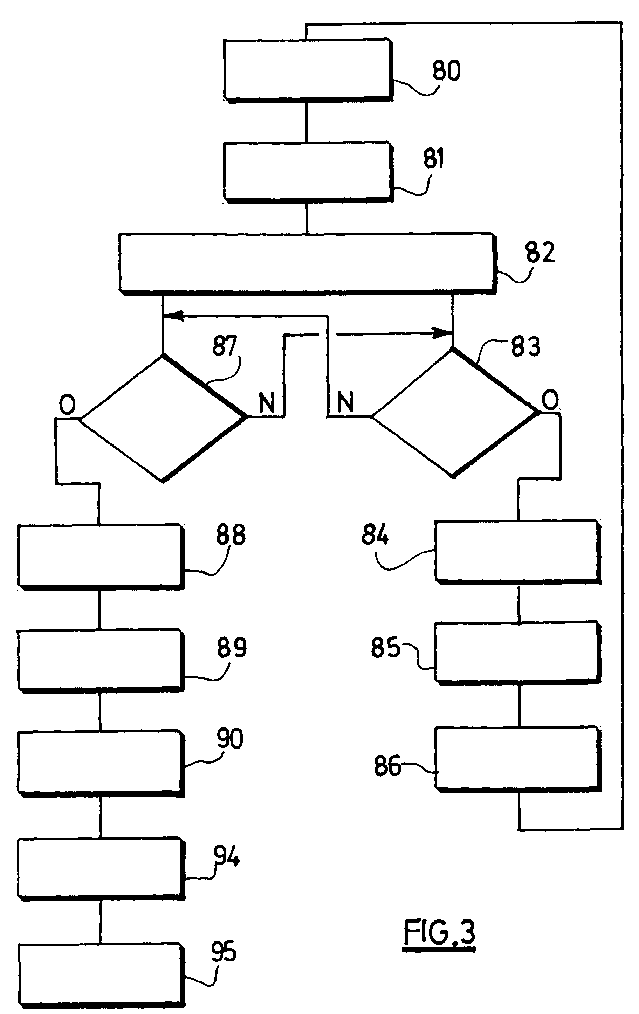

La figure 2 illustre l'exploitation classique, par le combiné 2 non relié à la base 4, du service de double appel offert par le réseau GSM 1 et la figure 3 illustre cette même exploitation lorsque le combiné 2 est relié à la base 4 et que celle-ci gère alors l'exploitation de ce service.

Sur la figure 2, à partir d'une étape 70 d'état stable, "en communication", de la liaison radio 11 et du combiné 2, on passe à une étape 71 de réception d'une signalisation d'appel en instance (bip sonore) fournie par le réseau GSM 1 au combiné 2 et reçue par le microprocesseur 21 de celui-ci. Dans cette exploitation classique du combiné 2, non connecté à la base 4, l'utilisateur accepte de prendre le nouvel appel en actionnant une touche "OK" du combiné 2, ou le refuse par action sur une touche "CLEAR". A cet effet, le microprocesseur 21 scrute cycliquement l'état de la touche OK à une étape 72 et scrute de même l'état de la touche CLEAR à une étape 73 concurrente. Ces étapes 72 et 73 sont rebouclées entre elles par leurs résultats négatifs (N), tandis qu'un résultat positif (O) à l'étape 72 fait passer à une étape 74 dans laquelle le combiné 2 transmet au réseau GSM 1 un signal d'accord. Le réseau GSM 1, à une étape 75, met alors en garde le premier correspondant du combiné 2 et commute, sur la liaison 11, le second correspondant qui était en attente. On passe ainsi à un autre état stable de communication. Si c'est la touche CLEAR qui est activée à l'étape 73 (O), cela ramène à l'étape 70, donc sans modification de l'état initial de la communication.

Sur la figure 3, les étapes 80 et 81 sont respectivement identiques aux étapes 70 et 71. A une étape suivante 82, le microprocesseur 21, esclave, retransmet la signalisation de double appel au poste 5 à travers les liaisons 56, 57 et les circuits 46, 40 et 45, qui constituent ainsi des moyens de déport de signalisations à partir du combiné 2 jusqu'à la base 4 ou le poste 5. Dans ce sens, le bloc de calcul 46 peut être transparent, l'unité centrale 40 étant prévue pour traiter le format de ces signalisations et éventuellement le convertir pour les liaisons de signalisation avec le poste 5.

Des étapes suivantes 83 et 87 correspondent aux étapes respectives 72 et 73 et concernent ici deux touches "R2" et "R1" du poste 5, représentant donc, fonctionnellement, les touches OK et CLEAR du combiné 2, ainsi déportées dans le poste 5 (ou dans le clavier 47 de la base 4).

En cas d'actionnement (O) de la touche R1, de refus, le poste 5 transmet une information correspondante à l'unité centrale 40, à une étape 84 et, à une étape 85, le bloc de calcul 46 reçoit cette information de l'unité centrale 40 et la convertit au format prévu pour le combiné 2. Dans cet exemple, l'information initiale "R1" est codée par la chaîne de caractères :

$$AT + CKPD = C$$

Cette information à format modifié est envoyée au microprocesseur 21, qui la reçoit à une étape 86 qui ramène à l'étape de repos 80. La touche R1 du poste 5 émule ainsi la touche CLEAR du combiné 2, à travers les moyens de liaison et de traitement qui les relient. En cas d'acceptation (O) à l'étape 87, elle est suivie d'étapes 88, 89, 90, homologues des étapes respectives 84, 85, 86 mais concernant la touche R2 émulant ainsi la touche OK du combiné 2. Les étapes suivantes 94 et 95, de changement d'état de la connexion de la liaison radio 11 dans le réseau GSM 1 sont identiques aux étapes 74 et 75.

L'information "R2" est convertie (46) au format :

$$AT + CKPD = "OK"$$

l'information "OK" étant en pratique codée sous la forme d'un caractère unique, ici Z, reconnu comme tel par le combiné 2.

On effectue ainsi une émulation, au moins partielle, du combiné 2, vis-à-vis de son réseau GSM 1, par la base 4 et éventuellement le poste 5. Les circuits 40, 42, 43, 46, 56, 57, qui établissent la liaison base 4 - combiné 2, et les circuits 40, 45, 46, 56, 57, 60 de déport de signalisations et/ou de signaux phoniques depuis le combiné 2 jusqu'à la base 4 et éventuellement le poste 5 constituent ensemble des moyens pour une telle émulation.

Les commandes ci-dessus commençant par AT sont perçues par le combiné 2 comme des commandes provenant d'un ordinateur, à un format que le microprocesseur 21 peut traiter. Il est donc inutile de modifier le combiné 2 lorsqu'on veut l'émuler par déport des commandes.

La détection (66) de la connexion du combiné 2 à la base 4 permet en outre à celle-ci (40) de commander, automatiquement ou sur commande (47, 5) d'un utilisateur, le réseau GSM 1, à travers le combiné 2 ou à travers le réseau RTC 3, pour que le réseau 1 renvoie systématiquement les appels radio, destinés au combiné 2, sur la ligne RTC 31. Ce renvoi peut avoir pour but d'utiliser un réseau filaire (3) offrant a priori une meilleure disponibilité, donc moins d'attente. En variante, il peut être prévu que ce soit le réseau GSM 1 qui détecte la présence du combiné 2 dans une cellule prédéterminée, où est domicilié l'utilisateur, et qui décide le renvoi, supposant alors que cet utilisateur ne peut, en pratique, qu'être chez lui. De préférence, un tel renvoi est temporisé après détection de l'entrée du combiné 2 dans la cellule considérée, afin de laisser le temps à l'utilisateur d'atteindre son domicile.

Ainsi, d'une façon générale, l'utilisateur du combiné 2 va utiliser localement, en remplacement du combiné 2, le poste 5 et ainsi disposer de la ligne RTC 31 et des fonctions du combiné 2, c'est-à-dire de ses fonctions de base, de commutation téléphonique, et des services du réseau GSM 1 et de ceux internes au combiné 2. Il peut ainsi choisir, en sortie, le réseau 1 ou 3 le plus économique : routage au moindre coût. L'unité centrale 40 peut aussi gérer cette fonction de coût minimal, en prévoyant, en mémoire 41, des tables de coût en fonction de l'heure. En outre, l'unité centrale 40 peut consulter la mémoire 23 pour y relever le cumul de durées des communications du combiné 2 sur une période déterminée. Ainsi, si un montant forfaitaire mensuel n'a pas encore été atteint peu avant la fin de mois, l'unité centrale 40 va aiguiller les appels sortants, issus du poste 5, vers le combiné 2 puisqu'ils présentent un coût marginal nul.

Dans cet exemple, où le terminal 5 du réseau téléphonique 3 est mobile, l'utilisateur peut se déplacer librement dans la zone couverte par la base 4 et y conserve donc la mobilité que lui procurait le combiné 2.

## Revendications

1. Terminal téléphonique (4, 5) d'un premier réseau téléphonique (3), comportant des moyens (40, 42, 43, 46, 56, 57, 60) pour être relié à un terminal téléphonique mobile (2) d'un deuxième réseau téléphonique (1) et des moyens (5, 40) pour commander le terminal mobile (2) lorsqu'il est soit en cours de communication soit libre d'en établir une, afin de disposer des services du terminal mobile (2) et de son réseau (1).

**2.** Terminal selon la revendication 1, dans lequel il est prévu des moyens (40,46-49, 56, 57, 60) de déport de signalisations à partir du terminal mobile (2).

**3.** Terminal selon la revendication 2, dans lequel les moyens de liaison (40, 42, 43, 46, 56, 57) et les moyens de déport (40, 46-49, 56, 57, 60) sont agencés pour constituer ensemble des moyens d'émulation (40, 42, 43, 46-49, 56, 57), au moins partielle, du terminal mobile (2) vis-à-vis du réseau (1) de celui-ci.

**4.** Terminal selon la revendication 3, dans lequel les moyens d'émulation (40, 42, 43, 45-48, 56, 57) sont agencés pour émuler des moyens (21) d'échange de messages courts (SMS).

**5.** Terminal selon l'une des revendications 1 à 4, dans lequel il est prévu des moyens (40, 42-46, ) de liaison phonique avec le terminal mobile (2).

**6.** Terminal selon la revendication 5, comportant une base (4) de raccordement au réseau téléphonique commuté (3) et au moins un poste sans fil (5) satellite de la base (4), agencé pour émuler le terminal mobile (2) à travers la base (4).

**7.** Terminal selon l'une des revendications 5 et 6, dans lequel il est prévu des moyens (40, 50) pour échanger des données de télécopie avec le terminal mobile (2).

**8.** Terminal selon la revendication 7, dans lequel les moyens (40, 50) d'échange de données sont agencés pour échanger des données de télécopieur.

**9.** Terminal selon l'une des revendications 7 et 8, dans lequel les moyens (40, 50) d'échange de données sont agencés pour échanger des informations de boîte vocale.

FIG.1

FIG.2

FIG.3

Office européen
des brevets

**RAPPORT DE RECHERCHE EUROPEENNE**

Numéro de la demande

EP 99 40 2546

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 98 11760 A (SALM PETER V D ;ERICSSON TELEFON AB L M (SE)) 19 mars 1998 (1998-03-19) * page 6, ligne 26 - page 9, ligne 20 * | 1-3,5,6 | H04Q7/32 |
| X | EP 0 660 628 A (NOKIA MOBILE PHONES LTD) 28 juin 1995 (1995-06-28) * colonne 2, ligne 25 - colonne 4, ligne 57 * | 1,5,6 | |
| A | EP 0 559 187 A (FUJITSU LTD) 8 septembre 1993 (1993-09-08) * colonne 11, ligne 25 - colonne 17, ligne 34 * | 1,2,5 | |

DOMAINES TECHNIQUES
RECHERCHES (Int.Cl.7)

H04Q
H04M

Le présent rapport a été établi pour toutes les revendications

| Lieu de la recherche | Date d'achèvement de la recherche | Examinateur |
|---|---|---|
| LA HAYE | 31 mars 2000 | Lõpez-Pérez, M-C |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 99 40 2546

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-03-2000

| Document brevet cité au rapport de recherche | | Date de publication | Membre(s) de la famille de brevet(s) | | Date de publication |
|---|---|---|---|---|---|
| WO 9811760 | A | 19-03-1998 | AU | 4702897 A | 02-04-1998 |
| | | | EP | 0925699 A | 30-06-1999 |
| EP 0660628 | A | 28-06-1995 | FI | 935838 A | 24-06-1995 |
| | | | JP | 7235968 A | 05-09-1995 |
| EP 0559187 | A | 08-09-1993 | JP | 5252106 A | 28-09-1993 |
| | | | DE | 69321858 D | 10-12-1998 |
| | | | DE | 69321858 T | 12-05-1999 |
| | | | US | 5450471 A | 12-09-1995 |
| | | | JP | 6013966 A | 21-01-1994 |

EPO FORM P0460

Pour tout renseignement concernant cette annexe : voir Journal Officiel de l'Office européen des brevets, No.12/82